# EUROPÄISCHE PATENTSCHRIFT

(11) **EP 0 750 833 B1**
(45) Veröffentlichungstag und Bekanntmachung des Hinweises auf die Patenterteilung: **22.12.1999**
(21) Anmeldenummer: 96108136.1
(22) Anmeldetag: 22.05.1996
(51) Int. Cl.: A01D 45/02, A01D 41/14

(54) **Erntevorsatz für landwirtschaftliche Arbeitsmaschinen zum Aufnehmen und Weiterführen von Halmfrüchten, beispielweise Maispflanzen**
Harvester head for agricultural machines for feeding and conveying stem crops
Tête de récolte pour machines agriculteures pour ramasser et convoyer des céréales

(30) Priorität: 27.06.1995 DE 19523255
(43) Veröffentlichungstag der Anmeldung: 02.01.1997
(73) Patentinhaber: CLAAS SAULGAU GMBH, D-88340 Saulgau (DE)
(72) Erfinder: Arnold, Rudolf, 88348 Saulgau (DE); Schulz, Wilfried, 88348 Saulgau (DE)

(56) Entgegenhaltungen:
- DE-A- 4 002 344
- DE-A- 4 030 066
- DE-C- 3 828 293
- GB-A- 1 294 245

## Beschreibung

Die Erfindung bezieht sich auf einen Erntevorsatz für landwirtschaftliche Arbeitsmaschinen gemäß dem Oberbegriff des Patentanspruches 1.

Ein gattungsbildendes Erntevorsatzgerät ist z. B. in der Deutschen Patentschrift 40 02 344 beschrieben. Bei dieser bekannten Ausführung können beidseitig eines Mittelteils angeordnete und mit je einem Satz Mäh- und Fördertrommeln ausgerüstete Seitenteile für eine Straßentransportstellung mit reduzierter Breitenerstreckung über Tragarme so nach oben und innen verschwenkt werden, daß sie innerhalb der Breite des Mittelteiles oberhalb von den an diesem angeordneten Mäh- und Fördertrommein nebeneinander liegen. Die Breite des Mittelteiles ist etwas kleiner als die durch die StVZO zugelassene Straßentransportbreite von maximal 3.00 m. Nachteilig bei einer solchen Ausführung ist, daß das Vorsatzgerät eine Arbeitsbreite von unter 6.00 m haben muß. Bei einer größeren Arbeitsbreite würden die nach innen verschwenkten und nebeneinander liegenden Mäh- und Fördertrommeln über die seitliche Begrenzung des Mittelteiles und somit auch über die 3.00 m - Grenze nach StVZO hinausragen, was nicht zulässig ist.

Aufgabe der vorliegenden Erfindung ist es somit, ein Gerät nach dem Gattungsbegriff so zu gestalten, daß es auch bei einer Arbeitsbreite von wesentlich mehr als 6.00 m in eine Stellung mit einer Transportbreite von unter 3.00 m verbracht werden kann.

Diese Aufgabe wird gelöst durch ein Erntevorsatzgerät mit den kennzeichnenden Merkmalen des Patentanspruches 1. Bei einer solchen Ausführung können die Seitenteile und die an ihnen angeordneten äußeren Mäh- und Förderelemente eine Arbeitsbreite gleich der Breite des Mittelteiles haben, was eine Vergrößerung der Gesamtarbeitsbreite des Erntevorsatzes gegenüber einem bekannten Gerät nach dem Gattungsbegriff von 6.00 m auf 9.00 m ausmachen kann.

Vorteilhafte Ausgestaltungen sind Gegenstand der Unteransprüche und werden nachfolgend anhand eines in den Zeichnungen dargestellten Ausführungsbeispieles näher erläutert und beschrieben.

Die Erfindung ist nicht auf die Anwendung speziell bei Erntevorsätzen der beschriebenen Art beschränkt. Sie kann in gleichem Maße bei anderen landwirtschaftlichen Arbeitsmaschinen verwendet werden, die über einen Mittelteil an einem Schlepper oder einer anderen Zugmaschine angeschlossen sind und bei denen seitlich am Mittelteil Seitenteile schwenkbar angeordnet sind, die Arbeitswerkzeuge, beispielsweise umlaufend angetriebene Mähkreisel (beispielsweise DE-OS 43 22 263), tragen. Solche Erfindungsgegenstände sind mit den Ansprüchen 6 - 9 zum Schutz begehrt. Es zeigen
- Figur 1: ein 3-teiliges Erntevorsatzgerät für Maispflanzen in Draufsicht und in Arbeitsstellung
- Figur 2: das Maiserntegerät in einer Ansicht von vorne
- Figur 3: das Maiserntegerät in Seitenansicht

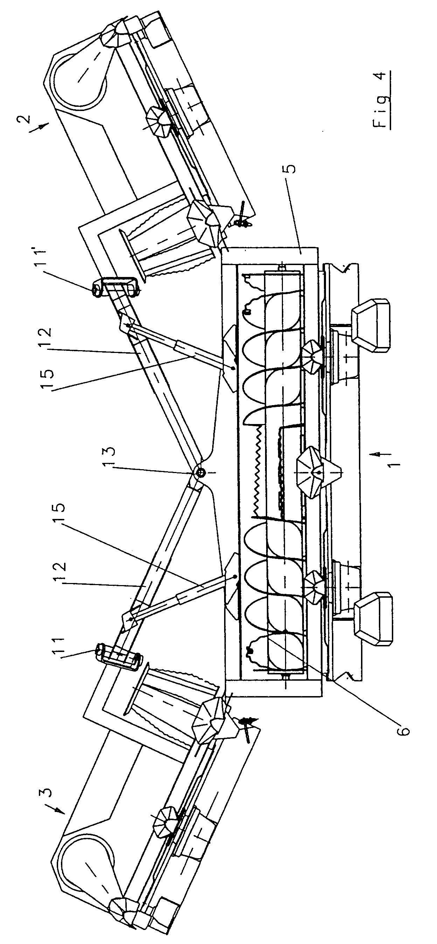

- Figur 4: das Maiserntegerät in einer Ansicht nach Figur 2 mit für eine Transportstellung hochgeschwenkten Seitenteilen und
- Figur 5: das Maiserntegerät in einer Ansicht nach Figur 2 mit in eine Transportstellung nach innen verschwenkten Seitenteilen

Das als Beispiel dargestellte Vorsatzgerät dient zur Ernte von auf dem Feld stehenden Maispflanzen. Es ist 3-teilig mit einem festen Mittelteil (1) und beidseitig an diesem schwenkbaren Seitenteilen (2, 3) ausgeführt. Das Mittelteil (1) wird von einer in Fahrtrichtung (F) vorne offenen Wanne (4) gebildet. An der Rückseite der Wanne (4) schließt sich ein nicht dargestellter Förderschacht mit Förderwalzen an, die der Weiterführung der aufgenommenen Maispflanzen in eine anschließende Erntemaschine dienen. In den Seitenwänden (5) der Wanne (4) ist eine Querförderschnecke (6) drehbar gelagert. Auf dem Wannenboden (7) sind auf etwa senkrechten Wellen (8) in Pfeilrichtung (10) umlaufende Mäh- und Förderelemente (9) befestigt, die beispielsweise aus Mähscheiben und koaxial darüber angeordneten und mit Förderfingern versehenen Förderscheiben bestehen können. Gleiche Mäh- und Förderelemente (9) sind auf dem Boden der Seitenteile (2) und (3) umlaufend gelagert. Der Antrieb der Querförderschnecke (6) sowie der Mäh- und Förderelemente (9) erfolgt in nicht dargestellter Weise über Antriebsstränge von einer Kraftquelle der angeschlossenen Erntemaschine aus.

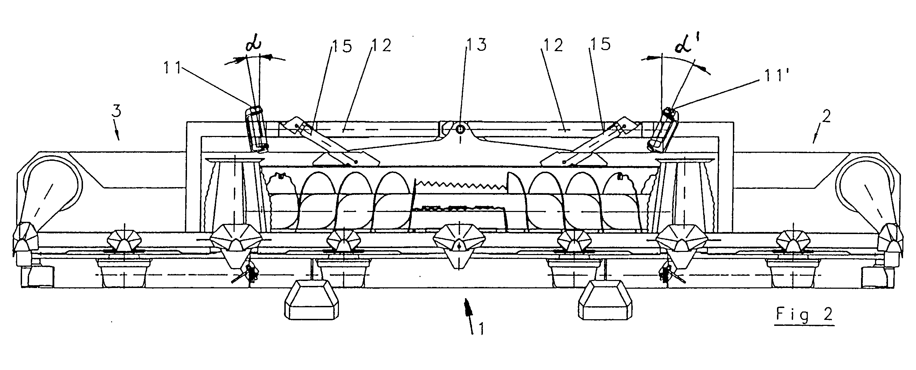

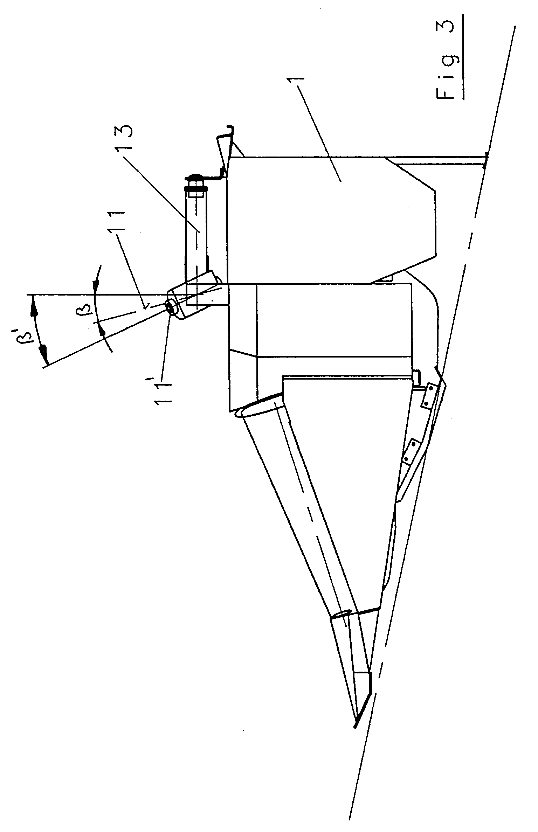

Die Seitenteile (2, 3) sind über beispielsweise Hydraulikzylinder (14) um Achsen (11, 11') am freien Ende von Tragarmen (12) schwenkbar gelagert, die mit ihrem inneren Ende um eine in Fahrtrichtung liegende Achse (13) im oberen Bereich der Wanne (4) über beispielsweise Hydraulikzylinder (15) in Höhenrichtung schwenkbar angeordnet sind. Die Hydraulikzylinder (14) sind an den Tragarmen (12) und die Hydraulikzylinder (15) am Mittelteil (1) abgestützt. Die Achsen (11) und (11') am freien Ende der Tragarme (12) verlaufen in Arbeitsstellung des Erntegerätes so mit unterschiedlichem Winkel schräg zur Fahrtrichtung (F) nach oben außen, daß sie einen Winkel α von etwa 10° bzw. einen Winkel α' von etwa 25° zur Fahrtrichtung (F) (Figur 2) sowie einen Winkel β von etwa 15° bzw. einen Winkel β' von etwa 25° zur senkrechten Ebene des Erntevorsatzes (Figur 3) einschließen.

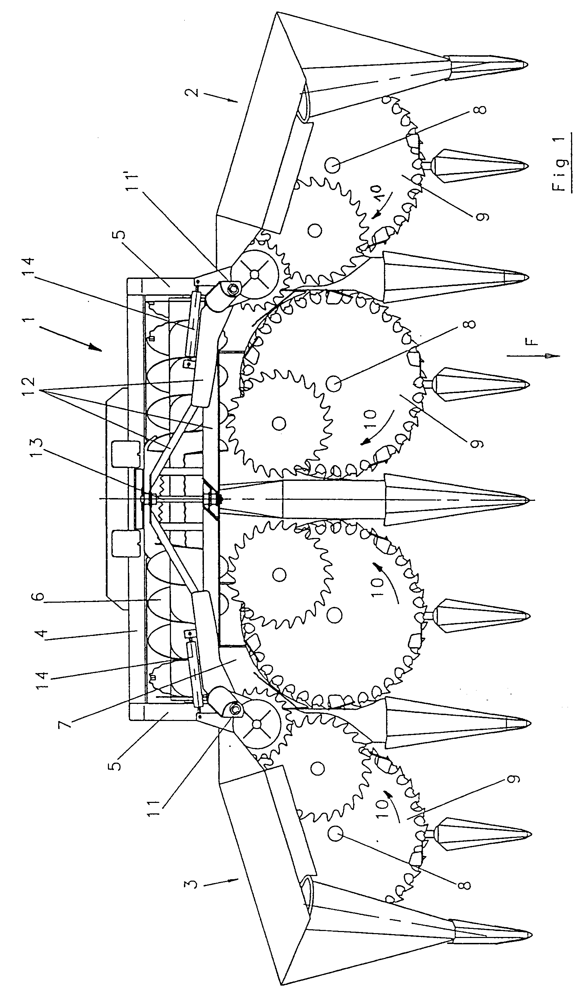

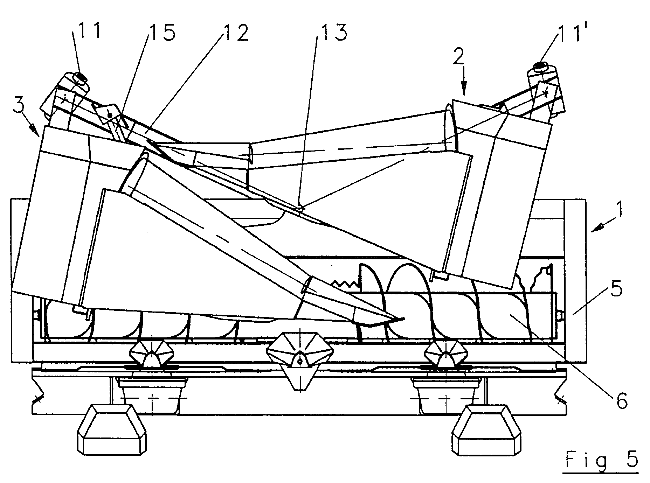

In Arbeitsstellung sind die Seitenteile (2, 3) mit ihren Mäh- und Förderelementen in nicht näher beschriebener Weise seitlich am Mittelteil (1) abgestützt und erforderlichenfalls verriegelt (Figuren 1 und 2). Für eine Transportstellung werden die Tragarme (12) mit den an ihrem äußeren Ende gelagerten Seitenteilen (2, 3) über die Hydraulikzylinder (15) in eine Stellung, wie aus Figur (4) ersichtlich, hochgeschwenkt. Danach werden die Seitenteile (2, 3) über die Hydraulikzylinder (14) um die Achsen (11, 11') so nach innen geschwenkt, daß sie die in Figur 5 gezeigte Lage einnehmen. Die Seitenteile (2, 3) liegen dabei infolge der unterschiedlichen Neigung ihrer Schwenkachsen (11, 11') teilweise übereinander geschichtet über dem Mittelteil (1), so daß sie eine Breite wesentlich größer als die halbe Breite des Mittelteiles (1) haben können.

## Patentansprüche

1. Erntevorsatz für landwirtschaftliche Arbeitsmaschinen zum Aufnehmen und Weiterführen von Halmfrüchten, beispielsweise Maispflanzen, mit mehreren in Arbeitsstellung nebeneinander an einem festen Mittelteil (1) und an beidseitig an diesem schwenkbaren Seitenteilen (2, 3) angeordneten Mäh- und/oder Förderelementen (9), beispielsweise um zum Boden gerichtete Achsen (8) umlaufend angetriebenen Mäh- und Fördertrommeln (10), wobei die Seitenteile an Tragarmen (12) gelagert und mit diesen zur Breitenreduzierung des Erntevorsatzes in Transportstellung in der Höhe verstellbar und nach innen über den Mittelteil verschwenkbar sind, dadurch gekennzeichnet, daß die Seitenteile (2,3) mit äußeren Mäh- und/oder Förderelementen (9) in eine zumindest zum Teil übereinander liegende Transportstellung schwenk- und arretierbar sind.

2. Erntevorsatz nach Anspruch 1, dadurch gekennzeichnet, daß die Seitenteile (2, 3) um Achsen (11, 11') am freien Ende der Tragarme (12) schwenkbar gehalten sind, die in Arbeitsstellung des Erntevorsatzes mit unterschiedlichem Winkel schräg zur Fahrtrichtung (F) nach oben außen geneigt verlaufen, wobei die Tragarme (12) mit ihrem inneren Ende um eine etwa in Fahrtrichtung (F) liegende Achse (13) am Mittelteil (1) schwenkbar gelagert sind.

3. Erntevorsatz nach Anspruch 2, dadurch gekennzeichnet, daß die Achsen (11, 11') am freien Ende der Tragarme (12) in Arbeitsstellung des Erntevorsatzes unter einem Winkel α von 5° - 15° und α' von 20° bis 30° zur Fahrtrichtung (F) sowie Winkel β von 10° bis 20° und β' von 20° - 30° zur senkrechten Ebene des Erntevorsatzes nach oben außen geneigt verlaufen.

4. Erntevorsatz nach Ansprüchen 1 - 3, dadurch gekennzeichnet, daß sich die Tragarme (12) etwa quer zur Fahrtrichtung (F) erstrecken und mit den Achsen (11, 11') an ihrem freien Ende im rückwärtigen Bereich des Mittelteiles (1) oberhalb von dessen seitlicher Oberseite liegen.

5. Erntevorsatz nach Ansprüchen 2 - 4, dadurch gekennzeichnet, daß die beiden Tragarme (12) mit ihrem inneren Ende um eine gemeinsame, etwa in Fahrtrichtung (F) liegende Achse (13) am Mittelteil (1) schwenkbar gelagert sind.

6. Landwirtschaftliche Arbeitsmaschine mit beidseitig an einem festen, mit einer landwirtschaftlichen Zugmaschine verbundenen Mittelteil (1) schwenkbaren Seitenteilen (2, 3), die Arbeitswerkzeuge, beispielsweise um zum Boden gerichtete Achsen (8) umlaufend angetriebene Mähkreisel (10), tragen, wobei die Seitenteile an Tragarmen (12) gelagert und mit diesen zur Breitenreduzierung der Arbeitsmaschine in Transportstellung in der Höhe verstellbar und nach innen über den Mittelteil verschwenkbar sind, dadurch gekennzeichnet, daß die Seitenteile (2, 3) mit ihren Arbeitswerkzeugen (9) in eine zumindest zum Teil übereinander liegende Transportstellung schwenk- und festlegbar sind.

7. Landwirtschaftliche Arbeitsmaschine nach Anspruch 6, dadurch gekennzeichnet, daß die Seitenteile (2, 3) um Achsen (11, 11') am freien Ende der Tragarme (12) schwenkbar gehalten sind, die in Arbeitsstellung der Maschine mit unterschiedlichem Winkel ( α, α', β, β') schräg zur Fahrtrichtung (F) nach oben außen geneigt verlaufen, wobei die Tragarme (12) mit ihrem inneren Ende um eine etwa in Fahrtrichtung (F) liegende Achse (13) am Mittelteil (1) schwenkbar gelagert sind.

8. Landwirtschaftliche Arbeitsmaschine nach Ansprüchen 6 und 7, dadurch gekennzeichnet, daß sich die Tragarme (12) etwa quer zur Fahrtrichtung (F) und die Seitenteile (2, 3) in Arbeitsstellung mit ihrer Längsachse etwa parallel zu den Tragarmen (12) erstrecken.

9. Landwirtschaftliche Arbeitsmaschine nach Ansprüchen 6-8, dadurch gekennzeichnet, daß die beiden Tragarme (12) mit ihrem inneren Ende um eine gemeinsame, etwa in Fahrtrichtung (F) liegende Achse (13) am Mittelteil (1) schwenkbar gelagert sind.

## Claims

1. A harvesting attachment for agricultural implements for picking up and passing on cereals, for example maize plants, comprising a plurality of cutter and/or conveyor elements (9) which are arranged in a working position in mutually juxtaposed relationship on a fixed central portion (1) and on side portions (2, 3) which are pivotable on both sides on the central portion, for example cutter and conveyor drums (10) which are driven in rotation about axes (8) which are directed towards the ground, wherein the side portions are mounted on carrier arms (12) and for reducing the width of the harvesting attachment in the transport position are displaceable in respect of height with the carrier arms and are pivotable inwardly over the central portion, characterised in that the side portions (2, 3) with outer cutter and/or conveyor elements (9) are pivotable into and arrestable in a transport position of being at least in part in mutually superposed relationship.

2. A harvesting attachment according to claim 1 characterised in that the side portions (2, 3) are mounted pivotably about axes (11, 11') at the free ends of the carrier arms (12), which in the working position of the harvesting attachment extend inclinedly upwardly and outwardly at different angles obliquely with respect to the direction of travel (F), wherein the carrier arms (12) are mounted with their inner ends pivotably to the central portion (1) about an axis (13) which is disposed approximately in the direction of travel (F).

3. A harvesting attachment according to claim 2 characterised in that the axes (11, 11') at the free end of the carrier arms (12), in the working position of the harvesting attachment, extend inclinedly upwardly and outwardly at an angle α of 5° - 15° and α' of 20° to 30° relative to the direction of travel (F) and an angle β of 10° to 20° and β' of 20° - 30° relative to the perpendicular plane of the harvesting attachment.

4. A harvesting attachment according to claims 1 to 3 characterised in that the carrier arms (12) extend approximately transversely with respect to the direction of travel (F) and lie with the axes (11, 11') at their free ends in the rearward region of the central portion (1) above the lateral top side thereof.

5. A harvesting attachment according to claims 2 to 4 characterised in that the two carrier arms (12) are mounted with their inner ends pivotably to the central portion (1) about a common axis (13) which is disposed approximately in the direction of travel (F).

6. An agricultural implement having side portions (2, 3) which are pivotable on a fixed central portion (1) connected to an agricultural tractor and which carry working tools, for example cutter drums (10) which are driven in rotation about axes (8) which are directed towards the ground, wherein the side portions are mounted on carrier arms (12) and for reducing the width of the implement in the transport position are displaceable in respect of height with the carrier arms and are pivotable inwardly over the central portion, characterised in that the side portions (2, 3) with their working tools (9) are pivotable into and fixable in a transport position of being at least in part in mutually superposed relationship.

7. An agricultural implement according to claim 6 characterised in that the side portions (2, 3) are mounted pivotably about axes (11, 11') at the free ends of the carrier arms (12), which in the working position of the implement extend inclinedly upwardly and outwardly at different angles (α, α', β, β') obliquely with respect to the direction of travel (F), wherein the carrier arms (12) are mounted with their inner ends pivotably to the central portion (1) about an axis (13) which is disposed approximately in the direction of travel (F).

8. An agricultural implement according to claims 6 and 7 characterised in that the carrier arms (12) extend approximately transversely with respect to the direction of travel (F) and the side portions (2, 3) extend in the working position with their longitudinal axis approximately parallel to the carrier arms (12).

9. An agricultural implement according to claims 6 to 8 characterised in that the two carrier arms (12) are mounted with their inner ends pivotably to the central portion (1) about a common axis (13) which is disposed approximately in the direction of travel (F).

## Revendications

1. Equipement frontal de récolte pour machines agricoles, pour ramasser et transporter des céréales, par exemple du maïs, comprenant plusieurs éléments de coupe et/ou de transport (9) qui, dans la position de travail, sont disposés les uns à côté des autres sur un tronçon central (1) fixe et sur des tronçons latéraux (2, 3) pivotants de chaque côté de celui-ci, par exemple des tambours de coupe et de transport (10) entraînés en rotation autour d'axes (8) orientés vers le sol, les tronçons latéraux étant montés sur des bras supports (12) et pouvant être déplacés en hauteur et amenés au dessus du tronçon central par pivotement en direction de l'intérieur, afin de réduire la largeur de l'équipement frontal dans la position de transport, caractérisé par le fait que les tronçons latéraux (2,3) portant les éléments de coupe et/ou les éléments de transport (9) extérieurs peuvent être amenés par pivotement et bloqués dans une position de transport dans laquelle ils sont disposés au moins partiellement l'un au dessus de l'autre.

2. Equipement frontal de récolte selon la revendication 1, caractérisé par le fait que les tronçons latéraux (2, 3) sont montés pivotants autour d'axes (11, 11') à l'extrémité libre des bras supports (12) qui, dans la position de travail de l'équipement frontal, sont inclinés vers le haut et vers l'extérieur suivant des angles variables par rapport à la direction de déplacement (F), les bras supports (12) étant montés pivotants par leur extrémité intérieure sur le tronçon central (1), autour d'un axe (13) disposé sensiblement dans la direction de déplacement (F).

3. Equipement frontal de récolte selon la revendication 2, caractérisé par le fait que les axes (11, 11') à l'extrémité libre des bras supports (12), dans la position de travail de l'équipement frontal, sont inclinés vers le haut et vers l'extérieur suivant un angle α de 5° - 15° et α' de 20° à 30° par rapport à la direction de déplacement (F) et suivant un angle β de 10° à 20° et β' de 20° - 30° par rapport au plan vertical de l'équipement frontal de récolte.

4. Equipement frontal de récolte selon les revendications 1 à 3, caractérisé par le fait que les bras supports (12) s'étendent sensiblement transversalement à la direction de déplacement (F) et, avec les axes (11, 11') prévus à leur extrémité libre, sont disposés dans la région arrière du tronçon central (1), au dessus de la face supérieure latérale de celui-ci.

5. Equipement frontal de récolte selon les revendications 2 à 4 caractérisé par le fait que les deux bras supports (12), par leur extrémité intérieure, sont montés pivotants sur le tronçon central (1), autour d'un axe (13) commun disposé sensiblement dans la direction de déplacement (F).

6. Machine agricole comportant des tronçons latéraux (2, 3) montés pivotants des deux côtés d'un tronçon central (1) fixe, lié à un tracteur, qui portent des outils de travail, par exemple des disques de coupe (10) entraînés en rotation autour d'axes (8) orientés vers le sol, les tronçons latéraux étant montés sur des bras supports (12) et pouvant être déplacés en hauteur et amenés au dessus du tronçon central par pivotement vers l'intérieur afin de réduire la largeur de la machine agricole dans la position de transport, caractérisée par le fait que les tronçons latéraux (2, 3) munis de leurs outils (9) peuvent être amenés par pivotement et bloqués dans une position de transport dans laquelle ils sont disposés au moins partiellement l'un au dessus de l'autre.

7. Machine agricole selon la revendication 6, caractérisée par le fait que les tronçons latéraux (2, 3) sont montés pivotants autour d'axes (11, 11') à l'extrémité libre des bras supports (12) qui, dans la position de travail de la machine, sont inclinés vers le haut et vers l'extérieur suivant des angles variables (α, α', β, β') par rapport à la direction de déplacement, les bras supports (12), au niveau de leur extrémité intérieure, étant montés pivotants sur le tronçon central (1) autour d'un axe (13) s'étendant sensiblement dans la direction de déplacement (F).

8. Machine agricole selon les revendications 6 et 7, caractérisée par le fait que les bras supports (12) s'étendent sensiblement transversalement à la direction de déplacement (F) et que les tronçons latéraux (2, 3), dans la position de travail, ont leur axe longitudinal sensiblement parallèle aux bras supports (12).

9. Machine agricole selon les revendications 6 - 8, caractérisée par le fait que les deux bras supports (12), au niveau de leur extrémité intérieure, sont montés pivotants sur le tronçon central (1), autour d'un axe (13) commun s'étendant sensiblement dans la direction de déplacement (F).
